# EUROPEAN PATENT APPLICATION

(11) **EP 0 809 087 A2**
(43) Date of publication of application: **26.11.1997**
(21) Application number: 97106087.6
(22) Date of filing: 14.04.1997
(51) Int. Cl.: G01C 19/56

(54) **Angular velocity detecting apparatus**

(30) Priority: 24.05.1996 JP 130259/96
(71) Applicant: TOYOTA JIDOSHA KABUSHIKI KAISHA, Aichi-ken (JP)
(72) Inventor: Sugitani, Nobuyoshi, Toyota-shi, Aichi-ken,471 (JP)
(74) Representative: Tiedtke, Harro, Dipl.-Ing.

(57) **Abstract**

This angular velocity detecting apparatus comprises a vibrating bar 6 having a piezoelectric crystal portion 6p, first and second electrodes 6a, 6c covering the corner portions of the crystal portion 6p; and a detecting circuit for detecting the angular velocity based on a potential difference occurring between the electrodes 6a, 6c. The electrodes 6a, 6c connected to the detecting circuit cover the corner portions, whereby the detection accuracy of angular velocity can be enhanced.

## Description

### BACKGROUND OF THE INVENTION

### Field of the Invention

The present invention relates to an angular velocity detecting apparatus for detecting an angular velocity of a detected body under motion by detecting Coriolis' force, and more particularly, to the technology for detecting the angular velocity at high accuracy. The angular velocity detecting apparatus of the present invention can be applied to navigation systems or posture control of moving bodies such as cars, airplanes, or ships, correction for vibration of image pickup device, and so on.

### Related Background Art

A so-called piezoelectric vibration gyro provided with a piezoelectric vibrator is a kind of the angular velocity detecting apparatus. When a voltage is applied to such a piezoelectric vibrator, the piezoelectric vibrator is deformed by the inverse piezoelectric effect, and the piezoelectric vibrator vibrates where the applied voltage satisfies a predetermined vibration condition.

When the piezoelectric vibrator is fixed to a moving body and when the moving body is rotated as vibrating this piezoelectric vibrator, the Coriolis' force based on the vibrating velocity of the piezoelectric vibrator and the angular velocity of rotation of the moving body acts on the piezoelectric vibrator. Since the piezoelectric vibrator is distorted by the Coriolis' force, the Coriolis' force can be detected by detecting an amount of this distortion, based on the piezoelectric effect of the piezoelectric vibrator. When the vibration of the piezoelectric vibrator is constant, the Coriolis' force is proportional to the angular velocity of rotation of the moving body. Therefore, the angular velocity of rotation of the moving body can be detected from the Coriolis' force detected.

Such a piezoelectric vibration gyro is described in the bulletin of Japanese Laid-open Patent Application No. 5-118857. The same bulletin discloses the vibrator comprising a quadrangular prism member, for example, made of metal, a thin-film piezoelectric material covering the four side faces of the quadrangular prism member, a pair of electrodes for drive attached to one side face of the piezoelectric material, and a pair of electrodes for detection attached to another side face thereof. One of the above electrodes for detection is adjacent to the electrodes for drive with a corner portion of the quadrangular prism member inbetween.

### SUMMARY OF THE INVENTION

The applicant intensively and extensively investigated the vibrator made of a piezoelectric crystal, and found that the charge induced in the piezoelectric crystal by vibration was concentrated in specific corner portions of the piezoelectric crystal. Accordingly, if the above-stated electrode structure of the conventional apparatus is applied, for example, to a quartz oscillator, part of the charge cannot be detected at the corner portions, because one detection electrode is attached only to one side face. Therefore, it cannot be said that the detection accuracy of angular velocity detected based on the charge detected using the above electrode structure of the conventional apparatus is sufficient.

The present invention has been accomplished in view of such a problem, and an object of the invention is to provide an angular velocity detecting apparatus that can detect the angular velocity at higher accuracy than those heretofore.

The present invention provides an angular velocity detecting apparatus for solving the above problem. This apparatus is an angular velocity detecting apparatus disposed on a detected body and arranged to detect an angular velocity of rotational motion of the detected body rotating about a predetermined axis, which comprises: a vibrator comprising a vibrating bar having a piezoelectric crystal portion which extends along the predetermined axis and a cross section of which perpendicular to the axis has first and second corner portions, a first electrode covering the first corner portion, and a second electrode covering at least a part of a region within a predetermined distance from the second corner portion; and a detecting circuit for detecting the angular velocity, based on a potential difference occurring between the first electrode and the second electrode, when the vibrating bar bends along a direction perpendicular to both of a direction directed from the first corner portion to the second corner portion and an extending direction of the axis.

For example, in the case of the foregoing piezoelectric crystal portion being made of quartz, the piezoelectric crystal portion extends along the Y-axis of quartz and the first and second corner portions of the cross section perpendicular to the Y-axis are defined by two straight lines substantially parallel to the Z-axis, intersecting a straight line substantially parallel to the X-axis of crystal. When the piezoelectric crystal portion bends along the direction perpendicular to both the direction directed from the first corner portion to the second corner portion and the extending direction of the aforementioned axis, that is, along the Z-axis direction, the charge occurs as being concentrated in the first and second corner portions.

Since the present apparatus is constructed so that at least the first electrode connected to the detecting circuit covers a corner portion of the piezoelectric crystal portion, the charge occurring in the corner portion can be detected efficiently so as to accurately detect a potential difference between the first electrode and the second electrode, which can improve the detection accuracy of the angular velocity obtained based on this potential difference.

The above vibrator preferably comprises another piezoelectric crystal portion a cross section of which perpendicular to the aforementioned axis has at least two corner portions and which is mechanically coupled with the piezoelectric crystal portion, a third electrode continuously covering the two corner portions of the another piezoelectric crystal portion, and a fourth electrode provided in a part of a region not covered by the third electrode in a surface of the another piezoelectric crystal portion so that with application of an alternating voltage between the fourth electrode and the third electrode the another piezoelectric crystal portion vibrates along the direction directed from the first corner portion to the second corner portion.

Here, "mechanically coupled" means that the piezoelectric crystal portions are coupled with each other so that vibration from the another piezoelectric crystal portion can be transmitted to the piezoelectric crystal portion, and, in order to realize such structure, these piezoelectric crystal portions are desirably comprised of an integral member.

In application of this vibrator to the above angular velocity detecting apparatus, because of the arrangement in which the third electrode continuously covers the two corner portions and in which the fourth electrode is provided as specified above, these electrodes may be physically separated from each other only by forming an electrode layer to cover the entire surface of the piezoelectric crystal portion and thereafter removing the electrode layer in the region between the third electrode and the fourth electrode, and, therefore, these electrodes can be formed readily.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### BRIEF DESCRIPTION OF THE DRAWINGS

Fig. 1 is a perspective view of the angular velocity detecting apparatus according to the embodiment of the present invention.

Fig. 2 is a cross-sectional view where the vibrator shown in Fig. 1 is cut along line A-A and observed along the arrows thereof.

Fig. 3 is a cross-sectional view where the vibrator shown in Fig. 1 is cut along line B-B and observed along the arrows thereof.

Fig. 4 is a cross-sectional view where the vibrator shown in Fig. 1 is cut along line C-C and observed along the arrows thereof.

Fig. 5 is a block diagram to show the system of the angular velocity detecting apparatus according to the embodiment of the present invention.

### DESCRIPTION OF THE PREFERRED EMBODIMENTS

An embodiment of the angular velocity detecting apparatus according to the present invention will be described with reference to the accompanying drawings. In the following description the same elements will be denoted by the same reference numerals and redundant description will be omitted.

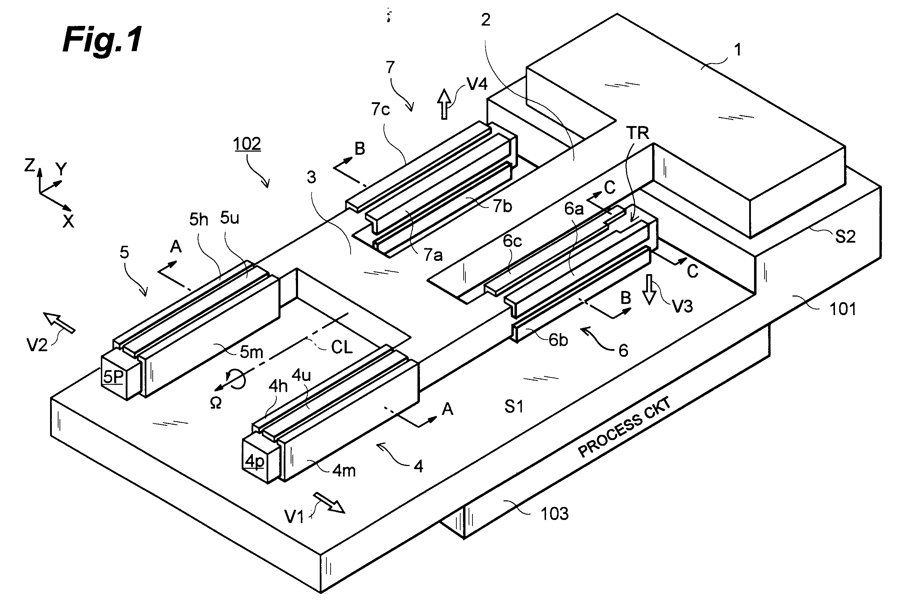

Fig. 1 shows the angular velocity detecting apparatus according to the embodiment. This apparatus comprises a vibrator 102 fixed at one end to a surface of a support stage 101 and a process circuit 103 attached to the back surface of the support stage 101. In the following description, a direction directed from the back surface to the front surface of the support stage 101 is defined as an "up" direction, while a direction opposite thereto as a "down" direction.

The support stage 101 has a principal surface S1 and a setting surface S2 spaced a predetermined distance apart upward from the principal surface S1, so that a level difference is formed at the border between the principal surface S1 and the setting surface S2.

The vibrator 102 has a fixed portion 1 at one end thereof and the fixed portion 1 is fixed to the setting surface S2 of the support stage 101 with an adhesive or the like. The vibrator 102 is comprised of the fixed portion 1, a supporting rod 2 extending from the fixed portion 1 in the direction directed from the setting surface S2 to the principal surface S1 while maintaining a predetermined clearance to the support stage 101, a base 3 supported by the supporting rod 2, a pair of vibrating bars for vibration 4, 5 extending from the base 3 and away from the fixed portion 1, and a pair of vibrating bars for detection 6, 7 extending from the base 3 and toward the fixed portion 1.

Further, the fixed portion 1, supporting rod 2, base 3, and vibrating bars 4 to 7 are comprised of an integral piezoelectric crystal member and a plurality of electrodes attached to this piezoelectric crystal member. A material for the piezoelectric crystal member according to the present embodiment is quartz.

Natural quartz is normally a columnar crystal, in which the vertical center axis of this columnar crystal is defined as the Z-axis or as the optical axis and a line passing the Z-axis and normally intersecting each surface of the columnar crystal as the Y-axis or as a mechanical axis. Further, a line passing the Z-axis and perpendicularly intersecting the vertical ridges of this columnar crystal is defined as the X-axis or as an electrical axis. The quartz used for this vibrator 102 is artificial quartz, but the structure thereof is the same as natural quartz. Thus, the description follows the above convention as to the directions of the respective axes. Namely, the thickness direction of the vibrator 102 is defined as the Z-axis and the axes perpendicular to this Z-axis and normal to each other are defined as the Z-axis and as the Y-axis, respectively.

The vibrator 102 will be described in further detail based on this convention.

The fixed portion 1 has a lower surface fixed to the setting surface S2 of the setting stage 101. The lower surface has a rectangular shape the longitudinal direction of which extends along the X-axis and the sides of which are defined by the X-axis and Y-axis. The upper surface opposite to the lower surface also has substantially the same shape as the lower surface. External surfaces of the fixed portion 1 located between the upper surface and the lower surface are defined as side faces of the fixed portion 1. One end of the supporting rod 2 is continuous from one side face of the fixed portion 1 and it extends along the Y-axis from the fixed portion 1. The base 3 is continuous from the other end of the supporting rod 2 and extends along the X-axis.

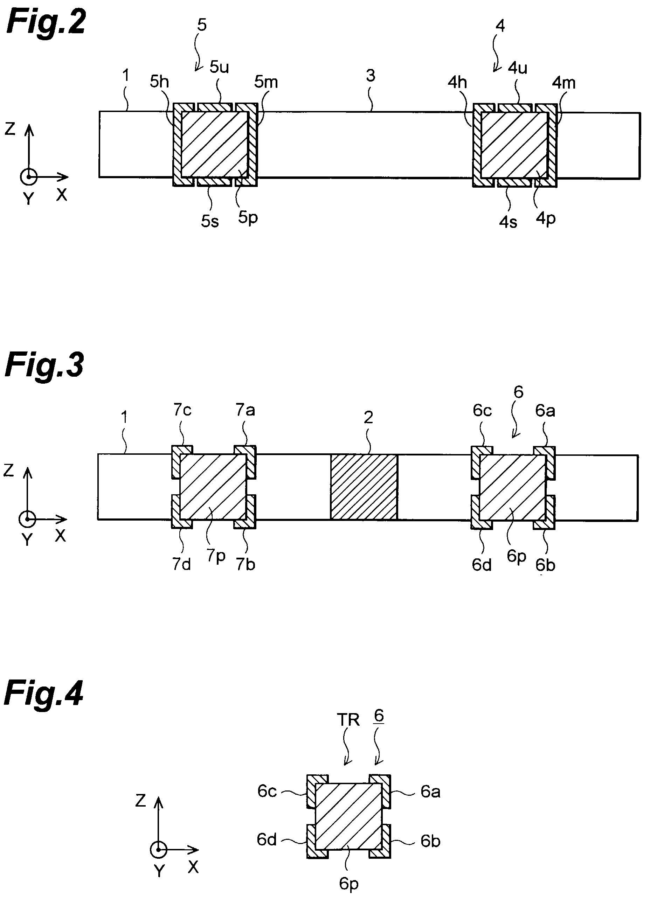

Fig. 2 is a cross-sectional view of the vibrator 102 where the vibrator 102 shown in Fig. 1 is observed along the direction of arrows of line A-A.

The first vibration-use vibrating bar 4 extends along the Y-axis from one end of the base 3 and away from the fixed portion 1, and is composed, as shown in Fig. 1 and Fig. 2, of a piezoelectric crystal portion 4p and, an upper electrode 4u, a lower electrode 4s, a right electrode 4m, and a left electrode 4h fixed to the respective side faces of the piezoelectric crystal portion 4p.

A cross section of the piezoelectric crystal portion 4p normal to the Y-axis is generally a rectangle defined by four sides. In the description, "generally a rectangle" does not mean a precise rectangle mathematically defined, but may mean a substantial quadrangle where an accurate rectangle cannot be formed because of etching upon fabrication of the piezoelectric crystal portion 4p, for example, where a pentagon is formed by bend of one of the four sides. The piezoelectric crystal portion 4p has four side faces including these four sides and being parallel to the Y-axis. Among these side faces of the piezoelectric crystal portion 4p, the lower surface is opposed through a space to the principal surface S1 of the support stage 101 and the upper surface is opposed to the lower surface of the piezoelectric crystal portion 4p. The remaining two side faces of the piezoelectric crystal portion 4p are normal to the upper surface and the lower surface and opposed to each other. Among these two side faces, the one located on the right side when seen from the tip of the vibrating bar 4 is defined as a right side face, while the other located on the left side as a left side face.

The upper electrode 4u is formed only on the upper surface of the piezoelectric crystal portion 4p and extends toward the tip of the vibrating bar 4 from near the border between the base 3 and this vibrating bar 4. The lower electrode 4s is formed only on the lower face of the piezoelectric crystal portion 4p and extends toward the tip of the vibrating bar 4 from near the border between the base 3 and the vibrating bar 4. The right electrode 4m continuously covers the whole of the right side face and parts of the upper and lower faces of the piezoelectric crystal portion 4p, so that the right electrode 4m covers a pair of corner portions vertically adjacent to each other of the piezoelectric crystal portion 4p.

The right electrode 4m extends from near the border between the base 3 and the vibrating bar 4 toward the tip of the vibrating bar 4 along the longitudinal direction of the upper electrode 4u while maintaining a constant clearance to the upper electrode 4u, thereby being physically separated from the upper electrode 4u. The left electrode 4h continuously covers the whole of the left side face and parts of the upper and lower faces of the piezoelectric crystal portion 4p, so that it covers a remaining pair of corner portions vertically adjacent to each other of the piezoelectric crystal portion 4p.

The left electrode 4h also extends from near the border between the base 3 and the vibrating bar 4 toward the tip of the vibrating bar 4 along the longitudinal direction of the upper electrode 4u as maintaining a constant clearance to the upper electrode 4u, thereby being physically separated from the upper electrode 4u. Each of the electrodes 4h, 4m on the left and right side faces also maintains a constant clearance to the lower electrode 4s, thus being physically separated therefrom.

These electrodes 4u, 4s, 4m, 4h can be formed as being physically separated from each other, only by forming an electrode layer covering the entire surface of the piezoelectric crystal portion 4p and thereafter removing the electrode layer in the regions between the electrodes. Namely, these electrodes can be separated from each other by using the etching process of the photolithography technology. The electrodes 4h and 4m on the left and right side faces each are positioned so as to generate electric field components perpendicular to a YZ plane passing the center of the piezoelectric crystal portion 4p and opposite to each other in the piezoelectric crystal portion 4p with application of voltage between the upper and lower electrodes 4u, 4s. Accordingly, each of the electrodes 4h and 4m on the left and right side faces can generate an electric field necessary and sufficient for bend in the piezoelectric crystal portion 4p and thus, needs no separation. Therefore, irradiation of exposure light can be effected only on the upper face and lower face of the piezoelectric crystal portion 4p easy to irradiate.

The second vibration-use vibrating bar 5 extends along the Y-axis from one end of the base 3 and away from the fixed portion 1, and is comprised, as shown in Fig. 1 and Fig. 2, of a piezoelectric crystal portion 5p and, an upper electrode 5u, a lower electrode 5s, a right electrode 5m, and a left electrode 5h fixed to the respective side faces of the piezoelectric crystal portion 5p. The shortest distance between a YZ plane including the center line CL of the supporting rod 2 and the second vibration-use vibrating bar 5 is equal to the shortest distance between this plane and the first vibration-use vibrating bar 4. Namely, the vibrating bars for vibration 4 and 5 are located at positions symmetric with respect to the supporting rod 2.

Since the second vibration-use vibrating bar 5 has the same structure as the first vibration-use vibrating bar 4, description is omitted of the details of the structure.

The vibrating bars for detection 6 and 7 are described next.

Fig. 3 is a cross-sectional view of the vibrator 102 where the vibrator 102 shown in Fig. 1 is observed along the direction of arrows of line B-B.

The first detection-use vibrating bar 6 extends along the Y-axis from one end of the base 3 and toward the fixed portion 1 and is comprised, as shown in Fig. 1 and Fig. 3, of a piezoelectric crystal portion 6p and, a right upper electrode 6a, a right lower electrode 6b, a left upper electrode 6c, and a left lower electrode 6d covering the respective corner portions of the piezoelectric crystal portion 6p. The longitudinal direction of the first detection-use vibrating bar 6 is coincident with the longitudinal direction of the first vibration-use vibrating bar 4, and these vibrating bars 6 and 4 are adjusted in their shape and weight or the like so as to transmit at least Z-directional vibration.

A cross section of the piezoelectric crystal portion 6p normal to the Y-axis is generally a rectangle defined by four sides. The piezoelectric crystal portion 6p has four side faces respectively including these four sides and being parallel to the Y-axis, and the four corner portions of the piezoelectric crystal portion 6p are defined by intersection of the four side faces. Among these side faces of the piezoelectric crystal portion 6p, the lower face is opposed through a space to the principal surface S1 of the support stage 101 while the upper face is opposed to the lower face of the piezoelectric crystal portion 6p. The remaining two side faces of the piezoelectric crystal portion 6p are perpendicular to the upper face and to the lower face and opposed to each other. Among these two side faces, the one located on the right side when seen from the tip of the vibrating bar 4 is defined as a right side face and the other located on the left side as a left side face.

The right upper electrode 6a covers only a corner portion defined by intersection between the upper face and the right side face of the piezoelectric crystal portion 6p and the right lower electrode 6b covers only a corner portion defined by intersection between the lower face and the right side face of the piezoelectric crystal portion 6p. Further, the left upper electrode 6c covers only a corner portion defined by intersection between the upper face and the left side face of the piezoelectric crystal portion 6p, and the left lower electrode 6d covers only a corner portion defined by intersection between the lower face and the left side face of the piezoelectric crystal portion 6p. The electrodes 6a to 6d each extend from near the border between the base 3 and the vibrating bar 6 toward the tip of the vibrating bar 6 while maintaining a predetermined clearance to each other, thereby being physically separated from each other.

Fig. 4 is a cross-sectional view of the vibrating bar 6 where the vibrating bar 6 shown in Fig. 1 is observed along the direction of arrows of line C-C.

As the mass of the vibrating bar 6 changes, the natural frequency of the vibrating bar changes. Changes of the mass and shape of electrode affect the natural frequency of the vibrating bar 6 more on the tip side of the vibrating bar 6 than on the root side. Since stress acting on the tip side is smaller than that on the root side, the detection sensitivity is less affected by the changes of the mass and shape of electrode on the tip side of the vibrating bar 6 than on the root side. Accordingly, in order to adjust the natural frequency, the right upper electrode 6a and left upper electrode 6c on the tip side from the position of the center of gravity of the vibrating bar 6 have a region TR formed by removing their parts by trimming, as shown in Fig. 1 and Fig. 4. In other words, the clearance between the right upper electrode 6a and the left upper electrode 6c at the tip of the vibrating bar 6 is greater than that on the root side of the vibrating bar 6. Such removal of electrode can be effected using a laser processing machine.

The second detection-use vibrating bar 7 extends along the Y-axis from one end of the base 3 and toward the fixed portion 1 and is comprised, as shown in Fig. 1 and Fig. 3, of a piezoelectric crystal portion 7p and, a right upper electrode 7a, a right lower electrode 7b, a left upper electrode 7c, and a left lower electrode 7d covering the respective corner portions of the piezoelectric crystal portion 7p. The shortest distance between the YZ plane including the center line CL of the supporting rod 2 and the second detection-use vibrating bar 7 is equal to the shortest distance between this plane and the first detection-use vibrating bar 6. Namely, these vibrating bars for detection 6 and 7 are located at positions symmetric with respect to the supporting rod 2, in the same manner as the vibrating bars for vibration 4 and 5 were.

As for the second detection-use vibrating bar 7, the electrodes are not removed on the tip side of this vibrating bar 7, different from the first detection-use vibrating bar 6. Except for this point, the second detection-use vibrating bar 7 has the same structure as the first detection-use vibrating bar 6, and therefore, description is omitted of the details of the structure. In order to vibrate each vibrating bar 4 to 7 stably, the vibrator 102 is desirably set in an airtight vessel the internal pressure of which is set lower than the atmospheric pressure.

Next described is excitation of the vibrator 102 and detection of angular velocity.

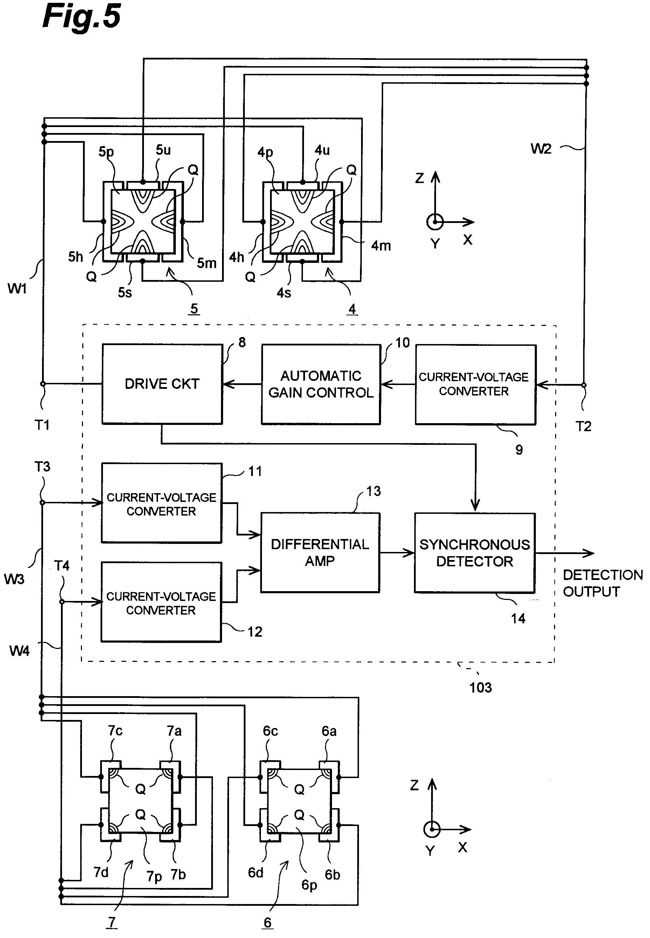

Fig. 5 shows the relation of connection of the electrodes 4u, 4s, 4m, 4h, 5u, 5s, 5m, 5h, 6a to 6d, 7a to 7d of the respective vibrating bars 4 to 7, and the process circuit 103 electrically connected to these electrodes.

The upper and lower electrodes 4u, 4s of the vibration-use vibrating bar 4 and the left and right electrodes 5h, 5m of the vibration-use vibrating bar 5 are electrically connected through wire W1 to terminal T1. Further, the left and right electrodes 4h, 4m of the vibration-use vibrating bar 4 and the upper and lower electrodes 5u, 5s of the vibration-use vibrating bar 5 are electrically connected through wire W2 to terminal T2.

Further, the right upper electrode 6a and left lower electrode 6d of the detection-use vibrating bar 6 and the right lower electrode 7b and left upper electrode 7c of the detection-use vibrating bar 7 are connected through wire W3 to terminal T3. The right lower electrode 6b and left upper electrode 6c of the detection-use vibrating bar 6 and the right upper electrode 7a and left lower electrode 7d of the detection-use vibrating bar 7 are connected through wire W4 to terminal T4. These wires W1 to W4 are desirably formed by the photolithography technology so as to be routed through the region on the supporting rod 2 of the vibrator 102 shown in Fig. 1 up to the fixed portion 1.

The process circuit 103 comprises an excitation circuit comprised of a driving circuit 8, a current-voltage converting circuit 9, and an automatic gain control circuit 10, and a detection circuit comprised of current-voltage converting circuits (current-voltage converters) 11, 12, a differential amplifier 13, and a synchronous detector 14.

The driving circuit 8 outputs a pulse wave of predetermined repetition rate, based on a voltage value input thereto in a steady state. Thus, when the pulse wave being an alternating voltage is applied to the terminal T1, the vibration-use vibrating bars 4 and 5 bend in the directions opposite to each other along the X-axis, as shown by arrows V1 and V2 in Fig. 1, by the inverse piezoelectric effect. Charge Q induced in the central areas of the side faces of the vibration-use vibrating bars 4 and 5 with bend is converted to a voltage signal by the current-voltage converting circuit 9. The automatic gain control circuit 10 decreases a voltage signal output therefrom as the voltage signal output from the current-voltage converting circuit 10 becomes larger. In contrast, the circuit 10 increases the voltage signal output therefrom as the voltage signal output from the current-voltage converting circuit 10 becomes smaller. Thus, the pulse wave output from the driving circuit 8 is fed back thereto, whereby the vibration-use vibrating bars 4 and 5 vibrate stably.

While the vibration-use vibrating bar pair 4 and 5 is vibrating at velocity V along the X-axis direction and when the vibrator 102 is rotated in the direction indicated by arrow Ω in Fig. 1, the Coriolis' force proportional to V × Ω acts along the Z-axis direction on the vibration-use vibrating bars 4 and 5, whereby the vibration-use vibrating bars 4 and 5 also vibrate each in the directions along the Z-axis.

On the other hand, since the detection-use vibrating bars 6 and 7 are mechanically coupled with the respective vibration-use vibrating bars 4 and 5 so as to transmit Z-directional vibration thereto, the detection-use vibrating bars 6 and 7 vibrate along the Z-axis with vibration of the vibration-use vibrating bars 4 and 5 in the directions along the Z-axis. As shown by arrows V3 and V4 in Fig. 1, the detection-use vibrating bars 6 and 7 vibrate in phases opposite to each other, i.e., in such a manner that Z-directional velocity vectors of the respective vibrating bars 6 and 7 at an arbitrary time during vibration may be opposite to each other.

When the Coriolis' force causes the detection-use vibrating bars 6 and 7 to bend and vibrate in the directions along the Z-axis, charge Q occurs by the piezoelectric effect in the all corner portions of the piezoelectric crystal portions 6p, 7p of the detection-use vibrating bars 6, 7 shown in Fig. 5. Since the charge Q is effectively detected by the electrodes 6a to 6d and 7a to 7d covering the corner portions, a potential difference between the electrodes is detected at high accuracy.

The charge occurring in the corner portion covered by the right upper electrode 6a of the detection-use vibrating bar 6 is converted to a voltage signal by the current-voltage converting circuit 11, and the charge occurring in the corner portion covered by the left upper electrode 6c is converted to a voltage signal by the current-voltage converting circuit 12. Since these voltage signals are supplied to the differential amplifier 13, the differential amplifier 13 outputs a voltage signal including a potential difference between the electrodes 6a and 6c adjacent along the X-direction.

Since this potential difference is one having occurred based on bend of the detection-use vibrating bar 6 due to the Coriolis' force, the Coriolis' force, i.e., the angular velocity of rotation acting on the vibrator 102 can be detected by detecting the potential difference.

Further, the charge occurring in the corner portion covered by the right upper electrode 7a of the detection-use vibrating bar 7 is converted to a voltage signal by the current-voltage converting circuit 12, and the charge occurring in the corner portion covered by the left upper electrode 7c is converted to a voltage signal by the current-voltage converting circuit 11. Since these voltage signals output from the detection-use vibrating bar 7 are also supplied to the differential amplifier 13, the voltage signal output from the differential amplifier 13 also includes a voltage component between the electrodes 7a and 7c.

Signals from the electrodes 6d and 6b covering the remaining corner portions of the detection-use vibrating bar 6 are superimposed on the signals from the electrodes 6a and 6c, respectively, and signals from the electrodes 7d and 7b covering the remaining corner portions of the detection-use vibrating bar 7 on the signals from the electrodes 7a and 7c, respectively. Accordingly, since these superposition enhances the intensity of voltage components based on the Coriolis' force against noise components, these superposition further enhances the detection accuracy of angular velocity by the present apparatus.

The alternating voltage signal output from the differential amplifier 13 is supplied to the synchronous detector 14 to be detected in synchronization with the pulse wave from the driving circuit 8, thereby being output as a direct-current voltage signal from the synchronous detector 14.

The present apparatus was constructed so that the electrode 6c paired with the detection-use electrode 6a covered the corner portion of the piezoelectric crystal portion 6p, but it may be placed near the corner portion where the electrode 6c is provided.

Further, the vibrator 102 of the present apparatus used the four vibrating bars 4 to 7, but the vibrator may be constructed using only two vibrating bars, with an electrode for vibration and an electrode for detection being placed on the respective vibrating bars.

The material for the piezoelectric crystal of the present apparatus was quartz, but another piezoelectric crystal such as LiTaO₃ may be used instead thereof.

The upper face and lower face of each piezoelectric crystal portion 4p, 5p, 6p, 7p are desirably each perpendicular to the Z-axis, but they may deviate by an angle within 15° from the plane normal to the Z-axis.

When the above angular velocity detecting apparatus is mounted on a detected body such as a car, the center axis of rotation of the detected body is not always coincident with the center line CL of the supporting rod 2. However, the angular velocity of the detected body can be detected as long as the motion of the detected body includes a rotational component about the center line CL of the supporting bar 2.

The detection-use electrodes 6a to 6d and 7a to 7d cover the corner portions of the respective piezoelectric crystal portions 6 and 7, which can decrease dispersion in detection accuracy due to fabrication errors of electrode portions located in the corner portions where the charge is concentrated. In addition, the vibration-use electrodes 4u, 4s, 4m, 4h and 5u, 5s, 5m, 5h can be made without removing any part of the electrodes on the side faces after evaporation of electrode over the whole of the side faces and upper and lower faces of the respective piezoelectric crystal portions 4 and 5, and therefore, no dispersion occurs in the area and position of the electrodes on the side faces. Since the vibration-use electrodes 4u, 4s, 4m, 4h and 5u, 5s, 5m, 5h of the present embodiment can be made with irradiation of exposure light only on the upper surface and lower surface using the photolithography technology, these electrodes can be fabricated using a contact type photomask. Further, since the present apparatus obviates a need for attaching piezoelectric elements to a member of metal or the like with an adhesive or the like, it is free of a change in adhesive strength of piezoelectric elements depending upon temperature. In addition, bonding wires are necessary for taking outputs out of such piezoelectric elements, but the electrodes of the present embodiment permit outputs to be taken out of the vibrating portions without using the bonding wires, which can suppress disconnection due to fatigue of bonding wires. In the case of the vibrator 102 being self-oscillated, it gradually becomes oscillating in one mode out of higher-order noise components, depending upon the electrode arrangement and the magnitude of Q value. However, since crystal impedance is normally low at high frequencies, higher-order vibration is likely to occur. The electrodes 4u, 4s, 4m, 4h, 5u, 5s, 5m, 5h, 6a to 6d, and 7a to 7d of the present apparatus continuously cover the proximity of the root and tip portions of the respective vibrating bars 4 to 7, and a mode to bend in the same direction is only of the first order. Accordingly, occurrence of higher-order vibration modes can be suppressed more as compared with an arrangement wherein the electrodes are placed only at the tip portions.

As described above, the angular velocity detecting apparatus according to the present embodiment comprises the vibrator 102 comprising the vibrating bar 6 having the piezoelectric crystal portion 6p which extends along the predetermined axis (the Y-axis) and the cross section of which perpendicular to this axis has first and second corner portions, the first electrode 6a covering the first corner portion, and the second electrode 6c covering at least a part of the region within the predetermined distance from the second corner portion; and the detecting circuit for detecting the angular velocity, based on a potential difference occurring between the first electrode 6a and the second electrode 6c when the vibrating bar 6 bends along the aforementioned direction (the Z-axis) perpendicular to both the direction directed from the first corner portion to the second corner portion (the X-axis) and the extending direction of the foregoing axis (the Y-axis).

Since in the present apparatus at least one detection-use electrode 6a covers the corner portion of the piezoelectric crystal portion, the angular velocity of rotation acting on the apparatus can be detected at high accuracy.

The angular velocity detecting apparatus according to the present embodiment comprises another piezoelectric crystal portion 4p the cross section of which perpendicular to the predetermined axis (the Y-axis) has at least two corner portions and which is mechanically coupled with the piezoelectric crystal portion 6p, the third electrode 4m continuously covering the two corner portions of this another piezoelectric crystal portion 4p, and the fourth electrode 4u provided in a part of the region not covered by the third electrode in the surface of the another piezoelectric crystal portion 4p so that the another piezoelectric crystal portion 4p vibrates along the direction directed from the first corner portion to the second corner portion (the X-axis) with application of an alternating voltage between the fourth electrode 4u and the third electrode 4m.

Accordingly, since in the present apparatus the third electrode 4m of the another piezoelectric crystal portion 4p continuously covers the two corner portions, this electrode can be made readily.

Further, the vibrator 102 of the angular velocity detecting apparatus according to the present embodiment comprises the base 3 for supporting the vibrating bar 6, and the first electrode 6a and second electrode 6c have the region TR formed so that the shortest distance between the first electrode 6a and the second electrode 6c on the opposite side to the base 3 of the vibrating bar 6 is wider than that between the first electrode 6a and the second electrode 6c on the base 3 side of the vibrating bar 6.

As described above, the angular velocity detecting apparatus comprises the vibrator 102 and the circuit 103 generating a signal related to an angular velocity of a body to which said apparatus is attached.

The vibrator 102 comprises the first vibrating bar 6, 7 having the first piezoelectric crystal portion 6p, 7p which extends along the predetermined axis (Y) and having the cross section perpendicular to the axis (Y), the cross section having first and second corners, the first electrode 6a, 7a covering neighboring sides of the first corner, and the second electrode 6c, 7c covering at least a part of a region within a predetermined distance from said second corner.

The circuit 103 is connected to the vibrator 102 and generates said signal based on the potential difference occurs between the first electrode 6a, 7a and the second electrode 6c, 7c, when the first vibrating bar (6, 7) bends along a direction (Z) perpendicular to both of a direction (X) directed from the first corner to the second corner and the predetermined axis (Y).

As described above, the vibrator 102 comprises: the second piezoelectric crystal portion 4p, 5p mechanically coupled with the first piezoelectric crystal portion 6p, 7p, the second piezoelectric crystal portion 4p, 5p having a cross section perpendicular to the axis (Y), the cross section of the second piezoelectric crystal portion 4p, 5p having at least two neighboring corners; a third electrode 4m, 4h, 5m, 5h continuously covering three sides defined by the two neighboring corners of the cross section of the second piezoelectric crystal portion 4p, 5p; and a fourth electrode 4u, 4s, 5u, 5s provided on a part of a region not covered by the third electrode on a surface of the second piezoelectric crystal portion 4p, 5p, the fourth electrode 4u, 4s, 5u, 5s being provided so as to cause the second piezoelectric crystal portion 4p, 5p to vibrate along said direction (X) directed from the first to second corners of the first piezoelectric crystal portion 6p, 7p by applying an alternating voltage between the fourth electrode 4u, 4s, 5u, 5s and the third electrode 4m, 4h, 5m, 5h.

As detailed above, the present apparatus can provide the angular velocity detecting apparatus well adjusted in the natural frequency of the vibrating bar 6 without degrading the detection sensitivity.

As described above, the angular velocity detecting apparatus according to the present invention is arranged so that the electrodes connected to the detecting circuit cover the corner portions of the piezoelectric crystal portion, whereby the detection accuracy of angular velocity can be enhanced.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

The basic Japanese Application No. 130259/1996 filed on May 24, 1996 is hereby incorporated by reference.

This angular velocity detecting apparatus comprises a vibrating bar 6 having a piezoelectric crystal portion 6p, first and second electrodes 6a, 6c covering the corner portions of the crystal portion 6p; and a detecting circuit for detecting the angular velocity based on a potential difference occurring between the electrodes 6a, 6c. The electrodes 6a, 6c connected to the detecting circuit cover the corner portions, whereby the detection accuracy of angular velocity can be enhanced.

## Claims

1. An angular velocity detecting apparatus comprising a vibrator (102) and a circuit (103) generating a signal related to an angular velocity of a body to which said apparatus is attached, characterized in that:
said vibrator (102) comprises a first vibrating bar (6, 7) having a first piezoelectric crystal portion (6p, 7p) which extends along a predetermined axis (Y) and having a cross section perpendicular to said predetermined axis (Y), said cross section having first and second corners, a first electrode (6a, 7a) covering neighboring sides of said first corner, and a second electrode (6c, 7c) covering at least a part of a region within a predetermined distance from said second corner; and
said circuit (103) is connected to said vibrator (102) and generates said signal based on the potential difference occurs between said first electrode (6a, 7a) and said second electrode (6c, 7c), when said first vibrating bar (6, 7) bends along a direction (Z) perpendicular to both of a direction (X) directed from said first corner to said second corner and said predetermined axis (Y).

2. An apparatus according to claim 1, wherein said vibrator (102) comprises:
a second piezoelectric crystal portion (4p, 5p) mechanically coupled with said first piezoelectric crystal portion (6p, 7p), said second piezoelectric crystal portion (4p, 5p) having a cross section perpendicular to said predetermined axis (Y), said cross section of said second piezoelectric crystal portion (4p, 5p) having at least two neighboring corners;
a third electrode (4m, 4h, 5m, 5h) continuously covering three sides defined by said two neighboring corners of said cross section of said second piezoelectric crystal portion (4p, 5p); and
a fourth electrode (4u, 4s, 5u, 5s) provided on a part of a region not covered by said third electrode on a surface of said second piezoelectric crystal portion (4p, 5p), said fourth electrode (4u, 4s, 5u, 5s) being provided so as to cause said second piezoelectric crystal portion (4p, 5p) to vibrate along said direction (X) directed from said first to second corners of said first piezoelectric crystal portion (6p, 7p) by applying an alternating voltage between said fourth electrode (4u, 4s, 5u, 5s) and said third electrode (4m, 4h, 5m, 5h).
